# EUROPEAN PATENT APPLICATION

(11) **EP 4 336 075 A1**
(43) Date of publication of application: **13.03.2024**
(21) Application number: 22194598.3
(22) Date of filing: 08.09.2022
(51) Int. Cl.: F16K 31/04, F16K 37/00, F23D 14/60, F23N 1/02, H02P 8/00

(54) **SYSTEMS AND METHODS FOR MEASURING THROTTLE POSITION**

(71) Applicant: Pittway Sarl, 1180 Rolle (CH)
(72) Inventor: LZICAR, Petr, 1180 Rolle (CH); KRALICEK, Libor, 1180 Rolle (CH); HAKL, Erik, 1180 Rolle (CH); SVOJANOVSKY, Thomas, 1180 Rolle (CH)
(74) Representative: Murgitroyd & Company

(57) **Abstract**

A system for measuring position of a throttle is provided, the system comprising a throttle, arranged to adjust the flow of a gas; a stepper motor connected to the throttle by a connecting member (204), the stepper motor being arranged to move the connecting member (204) and the throttle; a first member (202), arranged to be movable together with connecting member (204); a second member (201), arranged such that the movement of the of the first member (202) relative to the second member (201) changes an electrical parameter representative of the position and/or movement of the throttle.

## Description

### FIELD OF THE INVENTION

The present invention relates to methods and systems for measuring position of a throttle, for example a throttle that is used in or together with a gas valve.

### BACKGROUND OF THE INVENTION

In a gas appliance such as a boiler (e.g. for producing hot water), gas is used as fuel which is combusted (burned) to produce heat. Prior to entering a combustion chamber of the appliance, gas is mixed with air. The air to gas ratio depends on many factors and needs to be regulated. Therefore, the amount of gas that enters the appliance needs to be regulated.

To facilitate the flow of gas into the combustion chamber and/or to adjust the air and gas ratio, a valve is provided. The valve comprises a throttle which is movable to open, partially open or close a gas passage. The valve thus regulates the gas that is let in the combustion chamber. The valve is usually provided with a stepper motor which is configured to move a throttle to open, partially open or close the valve. The stepper motor is usually provided with means for determining how many steps have been taken by the motor and subsequently determining the state of opening of the valve and therefore how much gas is let into the combustion area and/or how much gas is mixed with the air.

In certain situations, an error in the determination of the valve positioning may occur. For example, the stepper motor may miss a step but count the step as if it was not missed. In such a case, the valve opening determined by the steps taken by the stepper motor is no longer accurate. The amount of gas in the combustion chamber and /or the air to gas ratio are thus also no longer accurate.

There is a need for independent measurement and/or verification of the opening of the gas valve (the position of the throttle).

### SUMMARY OF THE INVENTION

In a first aspect, a system for measuring position of a throttle, comprising a throttle, arranged to adjust the flow of a gas; a stepper motor connected to the throttle by a connecting member, the stepper motor being arranged to move the connecting member and the throttle; a first member, arranged to be movable together with connecting member; a second member, arranged such that the movement of the of the first member relative to the second member changes an electrical parameter representative of the position and/or movement of the throttle.

In embodiments of the first aspect, one or more of the following features may be used: the connecting member is a screw or a shaft connecting the stepper motor to the throttle; the first member is a screw with a ferromagnetic portion, connected to the connecting member; the second member is a coil; and the first member is arranged to move within the second member such that the voltage induced by the movement of the first member relative to the second member is representative of the movement of the throttle.

In a second aspect, a method of measuring a position of a throttle in a gas appliance is provided, the gas appliance comprising the system of the first aspect, the method comprising: moving, by the stepper motor, the throttle, wherein, as a result of moving the throttle, a first member moves relative to a second member; registering, by a controller, a change in an electrical parameter caused by the relative movement of the first member and the second member; determining, based on the change in the electrical parameter, the change in position of the throttle.

Additional embodiments of the invention are described in the following description and defined in the claims.

### BRIEF DESCRIPTION OF THE DRAWINGS

Specific embodiments of the present invention will now be described, by way of example only, with reference to the accompanying drawings in which:
Figure 1 is a schematic view of an example appliance in which methods and systems for measuring position of a throttle may be employed;
Figure 2 is a cross section of an example gas valve;
Figures 3a and 3b are example screws used in the example gas valve;
Figure 4 is a cross section of a detail of the example gas valve;
Figures 5a to 5c show different position of a screw in the example system for measuring position of a throttle;
Figure 6 is a cross section of another example gas valve.

### DETAILED DESCRIPTION

The below description is for illustration only, and is not intended to be limiting. Various elements of embodiments described below may be combined into a new embodiment, as appropriate.

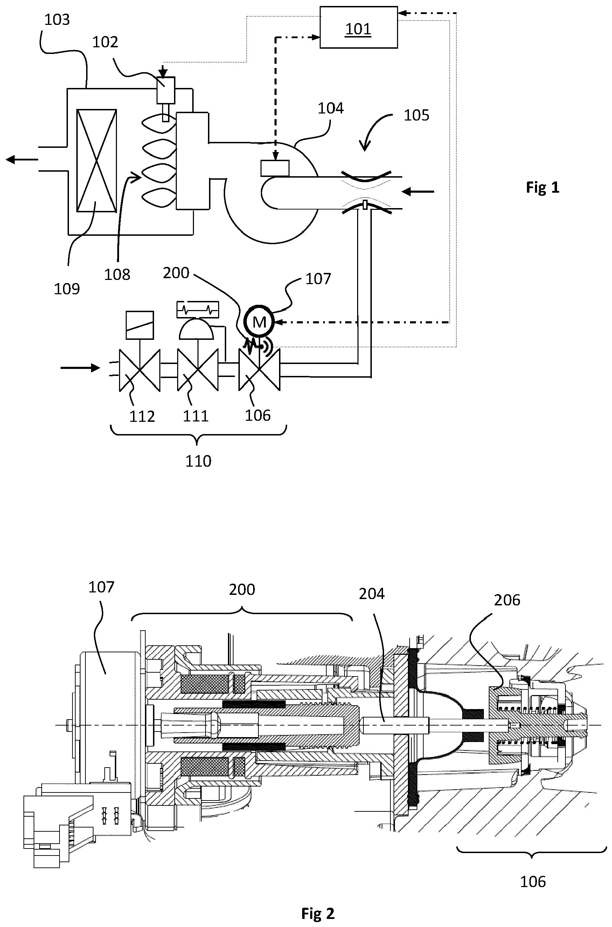

Fig 1 shows a schematic view of an example gas appliance 100. The appliance may be a boiler (a water heater) which combusts gas (e.g. natural gas or hydrogen) to produce heat.

In the example shown in Fig 1, the appliance comprises a controller 101, which is connected to various components of the appliance 100 and controls the various processes performed by these components. The appliance 100 comprises a combustion chamber 103. The combustion chamber 103 is a space into which fuel (usually mixed with air or other oxidizer) is supplied and in which heat is produced by combusting the fuel. The combustion chamber 103 comprises an igniter 102, which is connected to and controlled by the controller 101 and which initiates the fuel combustion. The combustion chamber 103 comprises a burner 108 and a heat exchanger 109. The example appliance of Fig 1 further comprises a fan 104, an air restrictor 105 and a pneumatic valve 110. The fan 104 serves to supply the mixture of air and fuel from a mixer (not shown) to the combustion chamber 103. The pneumatic valve 110 may comprise several components, for example a first valve 112, a servo valve 111 and a throttle valve 106. In an alternative embodiment (not shown), the throttle valve 106 may be positioned externally of the valve 110 (i.e. it may not be part of the valve 110 and/or may not be positioned within the same housing as the valve 110).

To achieve the correct air to gas ratio, both the flow of gas and the flow of air may be regulated. To this end, the throttle valve 106 is operable to allow or restrict flow of the fuel into the combustion chamber 103, and the fan 104 may be operable to regulate the amount of air. Alternatively or in addition, the air restrictor 105 may be operable to allow or restrict flow of air into the combustion chamber 103. The throttle valve 106 may be motorized, e.g. by means of a stepper motor, which opens, partially opens or closes the throttle valve 106. Similarly, the air restrictor 105 may be motorized. Together, the fan 104, the air restrictor 105 and the throttle valve 106 are operable to ensure a correct mixture of air and fuel in the combustion chamber 103. The air to fuel ratio is determined by the controller 101.

The extent to which the throttle valve 106 is opened is determined by the controller 101. This is based on various considerations such as how rich or lean the gas (fuel) is, how much air does the air restrictor 105 bring in, what is the desired speed and target temperature of the heated medium (e.g. water) and what are the desired combustion parameters. The controller 101 stores appropriate instructions for such determination.

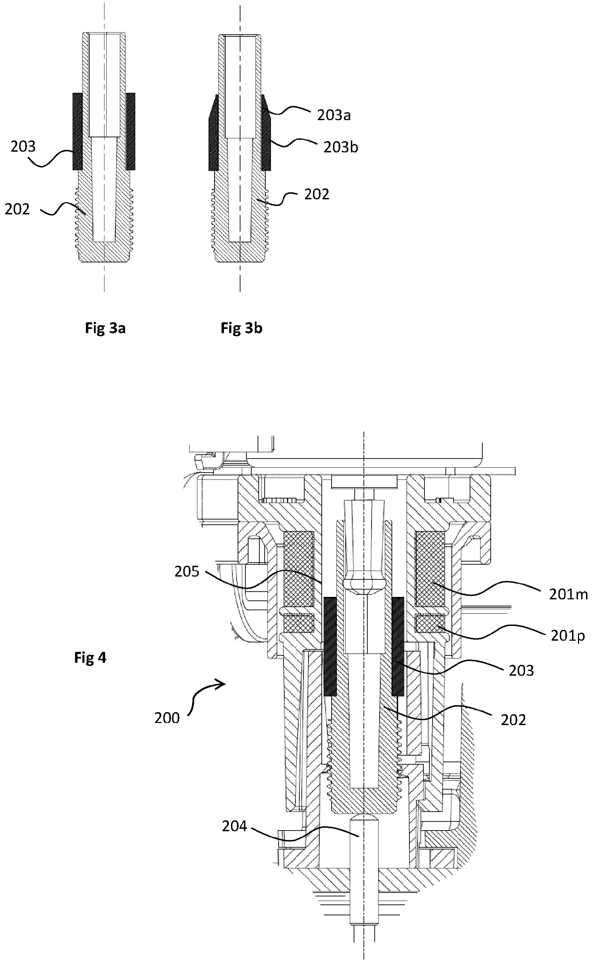

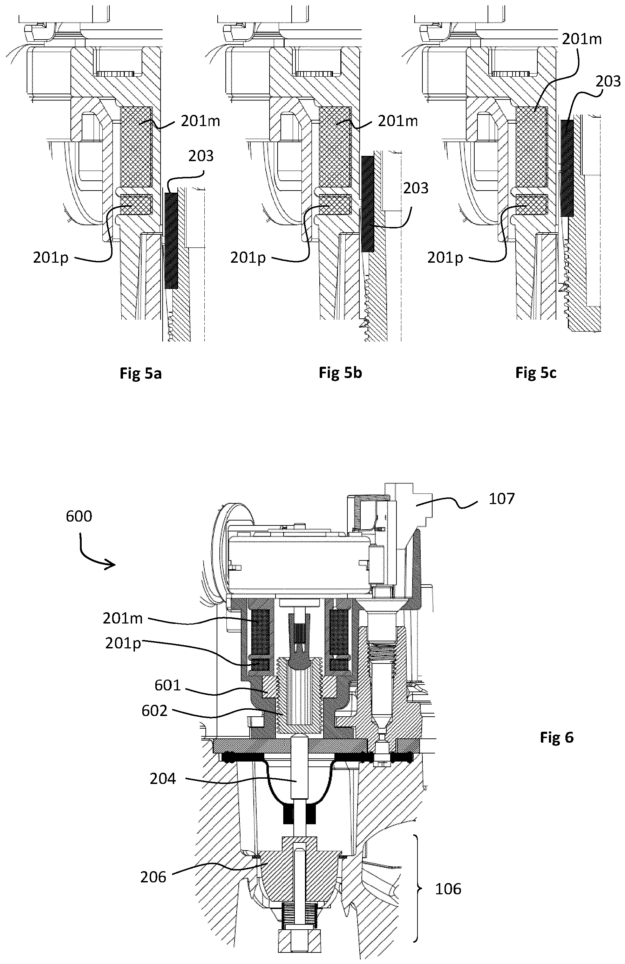

To ensure that the throttle valve 106 is opened, partially opened or closed as determined by the controller 101, a gas valve throttle position measurement system 200 is provided. The throttle position measurement system 200 measures the position of the gas valve throttle 206 independently of the motor 107 provided to move the throttle 206. An example embodiment of the throttle position measurement system 200 is shown in Figs 2 and 4. Another example embodiment of the throttle position measurement system 500 is shown in Fig 6.

In the example of Figs 2 to 4, the throttle 206 is connected to the stepper motor 107 by the assembly 200. The assembly 200 ensures that the movement generated by the motor 107 is transferred to the throttle 206. Responsive to the movement generated by the motor 107, the throttle 206 moves up or down to open, partially open or close the supply of fuel.

In the example of Figs 2-4 (see in particular Fig 4), the assembly 200 comprises a screw 202 and a pin 204. The screw 202 is movable within its seat 205. The screw 202 is connected to the pin 204, which is in turn connected to the throttle 206. The rotational movement of the motor 107 is transmitted via the screw 202 and the pin 204 into a linear movement of the throttle 206.

The screw 202 may be made of a non-conductive material, e.g. plastic. In the example of the Figures, the screw 202 comprises a head 203 (shown in detail in Fig 3). The head 203 is made of electrically conductive material, e.g. metal. The head 203 may be made of a ferromagnetic material, e.g. magnetic steel.

The head 203 may cover between one fifth and four fifths of the overall length of the screw 202. The head 203 may cover between one fourth and three fourths of the overall length of the screw, for example about one half of the overall length of the screw 202 or about one third of the overall length of the screw 202. The length of the head 203 may be about the same as the length of the stroke of the throttle 206 (i.e. the maximum length the throttle may travel between the fully open and fully closed positions). The length of the head 203 may be greater than the length of the stroke of the throttle 206 (i.e. the maximum length the throttle may travel between the fully open and fully closed positions), e.g. the length of the head 203 may be greater than 110%, 120% or 130% of the length of the stroke of the throttle 206. In general, the minimum length of the head 203 may be such as to ensure that the head 203 is positioned along a powered coil 201p (described in detail below) regardless of the position of the screw 202 within the seat 205.

The head 203 may be positioned at one end of the screw 202. The head 203 may be positioned in the middle of the screw 202. The head 203 may be a separate component adapted to be placed onto an existing screw. The screw 202 and the head 203 may be preassembled.

In an alternative embodiment (shown in Fig 5), the screw 202 as a whole may be made of conductive material. The head 203 may be an integral part of the screw 202.

Figs 3a and 3b show two example embodiments of the screw 202 with the head 203. Fig 3a shows the head 203 in the form of a hollow cylinder (i.e. the inner surface and the outer surface of the head 203 are cylindrical, share a common axis and differ in diameter). Fig 3b shows the head 203 having two parts. On its inner surface, the head 203 of Fig 3b is cylindrical. The outer surface of the head 203 has a part 203b which is cylindrical and a part 203a which is conical (tapered).

In the example of the Figures, the screw seat 205 comprises a pair of coils 201. The pair of coils 201 is arranged such that the screw 202 is movable within (inside of the winding of) both coils 201. The conductive head 203 of the screw 202 is arranged such that when the screw 202 moves, the head 203 of the screw moves within (inside of the winding of) both coils 201. Of the pair of coils 201, a first coil is a powered coil 201p, while a second coil is a measurement coil 201m. The powered coil 201p is connected to a source of power (source of alternating current). The measurement coil 201m is connected to means of measuring induced voltage and/or current. The screw 202 is within the winding of the powered coil 201p at all times, while the screw 202 may not be within the winding of the measurement coil 201m.

By moving the screw 202 and in particular the conductive head 203 within the pair of coils 201, voltage is induced in the measurement coil 201m. This voltage is representative of the movement of the screw 202.

Figs 5a-5c show three example positions of the screw 202 and in particular the head 203 relative to the measurement coil 201p and the measurement coil 201m. Figs 5a and 5c show the extreme positions; in Fig 5a, if the head 203 is below the position shown in Fig 5a or above the position shown in Fig 5c, the measurement may not be as precise and/or may not be possible. The most precise measurement is obtained between the extreme positions showin in Figs 5a and 5c, as shown in Fig 5b.

Because the movement of the screw 202 is transferred via the pin 204 to the throttle 206, the voltage induced in the measurement coil 201m is representative of the movement of the throttle 206. This voltage induced in the measurement coil 201m represents an independent way of verifying the extent to which the throttle 206 is opened, and therefore how much gas is allowed to flow through the throttle valve 106. This may be used as a safety loop of gas combustion.

Determining the movement of the throttle 206 from induced voltage measured at the measurement coil 201m may be advantageous, in particular in situations where flame ionization measurement is not feasible and/or where there is a requirement for more than one throttle settings. For example, to initiate combustion, different appliances may require different air to gas ratio, and if such appliance does not have combustion sensor, precise throttle position sensor is advantageous for safe operation as a safety loop.

A particular application may be when the gas is hydrogen. In appliances combusting hydrogen, the methods based on detecting flame and/or ionization do not work, and the system described above therefore represents an independent way of verifying the air to gas ratio.

The embodiment of the screw 202 and the head 203 of Fig 3b may provide more accurate measurement of the position of the throttle 206.

An alternative embodiment of a gas valve throttle position measurement system 600 is shown in Fig 6. Most of the components of the gas valve throttle position measurement system 600 correspond to the elements of gas valve throttle position measurement system 200 and work in a similar manner; the description of these will be omitted for the sake of brevity. The gas valve throttle position measurement system 600 comprises a screw 602 which is made of (consists of) ferromagnetic material, e.g. magnetic steel.

In an embodiment, gas valve throttle position measurement system 200 may be provided as a kit of components that may be fitted or retrofitted into existing gas appliances having existing valves. In other words, there is no need to replace the components of the appliance such as the throttle valve 106 or the stepper motor 107. The only components that may need adapting or replacing are the screw seat 205 and the screw 202. In an embodiment, an existing screw seat may be adapted by adding the pair of coils 201, while an existing screw may be adapted by adding the head 203. Appropriate instructions may then be stored in the controller 101 to interpret the voltage measured by the measurement coil 201m.

## Claims

1. A system for measuring position of a throttle, comprising:
a throttle, arranged to adjust the flow of a gas;
a stepper motor connected to the throttle by a connecting member, the stepper motor being arranged to move the connecting member and the throttle;
a first member, arranged to be movable together with connecting member;
a second member, arranged such that the movement of the of the first member relative to the second member changes an electrical parameter representative of the position and/or movement of the throttle.

2. The system of claim 1, wherein the connecting member is a shaft connecting the stepper motor to the throttle.

3. The system of claim 1 or claim 2, wherein the first member is a screw comprising a ferromagnetic portion, connected to the connecting member.

4. The system of claim 3, wherein the screw is cylindrical.

5. The system of claim 3, wherein the screw is at least partly tapered.

6. The system of any one of claims 3-5, wherein the length of the feromagnetic portion is about 120% of a length of stroke of the throttle.

7. The system of any one of the preceding claims, wherein the second member comprises at least one coil.

8. The system of claim 7, wherein the second member comprises two coils.

9. The system of any one of the preceding claims, wherein the first member is arranged to move within the second member such that the voltage induced by the movement of the first member relative to the second member is representative of the movement of the throttle.

10. A method of measuring a position of a throttle in a gas appliance, the gas appliance comprising the system of claim 1, the method comprising:
moving, by the stepper motor, the throttle, wherein, as a result of moving the throttle, a first member moves relative to a second member;
registering, by a controller, a change in an electrical parameter caused by the relative movement of the first member and the second member;
determining, based on the change in the electrical parameter, the change in position of the throttle.
